# DEMANDE DE BREVET EUROPEEN

(11) **EP 3 913 231 A1**
(43) Date de publication de la demande: **24.11.2021**
(21) Numéro de dépôt: 21173301.9
(22) Date de dépôt: 11.05.2021
(51) Int. Cl.: F04D 29/54, F02C 7/05, F02K 3/06, F01D 25/24, F01D 21/04

(54) **PIÈGE À DÉBRIS**

(30) Priorité: 22.05.2020 BE 202005358
(71) Demandeur: Safran Aero Boosters, 4041 Herstal (BE)
(72) Inventeur: DE CROMBRUGGHE DE PICQUENDAELE, Tristan Julien Laurent, Herstal (BE); PRINCIVALLE, Rémy Henri Pierre, Herstal (BE)
(74) Mandataire: Gevers Patents

(57) **Abrégé**

La présente invention concerne un piège à débris comprenant des rainures (20) située dans une région de rétrécissement (14) d'une veine primaire (12) de flux primaire de turbomachine double flux (100) pour aéronef. La région de rétrécissement (14) peut être appelée « col de cygne ». Elle est située entre la rangée d'aubes statoriques (170) et le compresseur basse pression (120).

## Description

### Domaine technique

La présente invention concerne un piège à débris intégré dans un carter délimitant le flux primaire d'une turbomachine double flux pour aéronef.

### Art antérieur

Lorsqu'un aéronef croise des éléments solides, par exemple des oiseaux, il arrive que ceux-ci soient happés par une turbomachine. La soufflante réduit ces éléments en débris, qui sont entrainés par les flux primaire et secondaire de la turbomachine. Les débris entrainés par le flux primaire peuvent endommager les différents éléments, notamment les aubages des compresseurs.

Le document EP2368045B1 décrit des cavités au niveau d'un compresseur, en aval du stator. Ces cavités ne permettraient donc pas de protéger les aubages du compresseur des débris.

Le document EP3263867 A1 décrit un moteur comprenant un compresseur, une chambre de combustion et une turbine situés dans un trajet d'écoulement primaire. Un conduit d'extraction de particules relie le trajet d'écoulement primaire à un trajet d'écoulement de dérivation.

Le document US2019/024587 A1 décrit un moteur comprenant un ventilateur, un noyau de moteur et un conduit d'écoulement d'air. Le conduit d'écoulement d'air définit un passage central configuré pour conduire l'air poussé par le ventilateur dans le noyau de moteur et un passage de dérivation.

### Résumé de l'invention

La présente invention a pour but de réduire les dégâts engendrés par des débris, par exemple des débris d'oiseaux, entrainés par le flux primaire.

A cet effet, l'invention propose un carter pour turbomachine double flux pour aéronef, le carter comprenant une paroi intérieure délimitant extérieurement une veine primaire de ladite turbomachine double flux, la paroi intérieure comprenant une région de rétrécissement dans laquelle la paroi intérieure a un diamètre qui diminue selon la direction amont-aval, la région de rétrécissement étant prévue pour être en amont d'un compresseur basse pression de la turbomachine double flux ;
caractérisé en ce que, dans la région de rétrécissement, ladite paroi intérieure comprend une pluralité de rainures débouchant dans la veine primaire.

Les rainures permettent de piéger au moins une partie des débris, afin qu'ils ne pénètrent pas plus loin dans la veine primaire, et n'endommagent pas les éléments situés en aval des rainures, en particulier le compresseur basse pression et les aubes mobiles. Puisqu'elles sont situées dans la région de rétrécissement (aussi appelée col de cygne), l'entrainement des débris par le flux primaire amène naturellement les débris vers les rainures. L'orientation au moins partiellement vers l'aval de la partie débouchante des rainures permet que les débris s'y insèrent facilement, puisqu'ils suivent un trajet qui est globalement de l'amont vers l'aval.

Les rainures sont borgnes. En d'autres termes, elles ne débouchent pas dans la veine secondaire.

Les rainures sont préférentiellement des rainures dans la paroi : elles ne sont pas des espaces entre des pièces formant la paroi ou des parties de la paroi. En d'autres termes, les rainures ont une surface intérieure d'une seule pièce.

Dans un mode de réalisation, la paroi intérieure comprend un point d'inflexion dans la région de rétrécissement; la pluralité de rainures étant située, au moins partiellement, en amont dudit point d'inflexion. En effet, en amont du point d'inflexion la paroi intérieure est particulièrement bien orientée pour entrer en contact avec les débris.

Dans un mode de réalisation, les rainures ont une direction circonférentielle. Un tel arrangement permet d'avoir un grand volume dans les rainures à longueur axiale donnée, et permet de bien capter les débris sur toute la circonférence. Les rainures peuvent être continues sur la circonférence du carter ou comprendre des interruptions sur la circonférence du carter.

Dans un mode de réalisation, les rainures sont réparties en plusieurs rangées.

Dans un mode de réalisation, chaque rainure comprend une première partie débouchant dans le conduit, la première partie étant orientée au moins partiellement vers l'aval.

Dans un mode de réalisation, les rainures comprennent une deuxième partie reliée à la première partie par un coude. Cela permet d'augmenter le volume des rainures à longueur axiale donnée.

Dans un mode de réalisation, la deuxième partie est orientée vers l'amont. En d'autres termes, après le coude, la progression dans la rainure est au moins partiellement vers l'amont. Cela permet d'augmenter d'autant plus le volume des rainures, et d'y bloquer les débris. Cela permet d'augmenter le volume des rainures à longueur axiale donnée.

Dans un mode de réalisation, la première partie s'élargit au fur et à mesure d'une progression dans la rainure. En d'autres termes, l'aire de la section transverse de la première partie augmente lorsqu'un débris progresse dans la rainure. Cela permet d'augmenter le volume des rainures, et de retenir les débris dans les rainures.

Dans un mode de réalisation, la pluralité de rainures comprend un nombre de rainures inférieur ou égal à douze. Ce nombre permet de piéger un volume de débris important sans avoir d'impact important sur l'aérodynamique de la turbomachine.

Dans un mode de réalisation, la première partie a une profondeur entre 2 mm et 100 mm et/ou une épaisseur entre 0,5 mm et 35 mm et/ou la pluralité de rainures a un volume total entre 7500 mm³ et 10⁸ mm³.

L'invention concerne en outre une turbomachine double flux pour aéronef comprenant un carter tel que décrit dans le présent document, et un aéronef comprenant une telle turbomachine.

Dans un mode de réalisation, la turbomachine comprend une soufflante, un compresseur basse pression, et une rangée d'aubes statoriques entre la soufflante et le compresseur basse pression ; la région de rétrécissement étant prévue pour être en aval de ladite rangée d'aubes statoriques. Les rainures sont particulièrement efficaces lorsqu'elles sont situées dans cette partie de la paroi intérieure car situées dès l'entrée de la veine primaire.

Dans un mode de réalisation, la paroi intérieure du carter a une forme dite en « col de cygne » entre ladite rangée d'aubes statoriques et le compresseur basse pression.

Dans un mode de réalisation, toutes les rainures débouchent dans la veine primaire dans une zone située entre un bord aval de la rangée d'aubes statoriques et une ligne de la paroi intérieure située à une première distance radiale, vers l'intérieur, d'une prolongation axiale d'une ligne de rayon maximal d'un carénage du tronc de cône, la première distance radiale étant la moitié de la distance radiale entre la ligne de rayon maximal du carénage du tronc de cône et une ligne du carter qui correspond à la partie la plus en amont du compresseur basse pression. Ainsi, les rainures ne sont pas trop éloignées du compresseur basse pression afin de bien capturer les débris, et il y a un espace entre la zone des rainures et la partie la plus en amont du compresseur basse pression, qui permet que la présence des rainures n'influence pas outre mesure l'aérodynamique dans le compresseur basse pression.

Dans un mode de réalisation, la turbomachine comprend un réducteur couplant le compresseur basse pression et la soufflante. Le réducteur a pour effet que la soufflante tourne moins vite (ce qui augmente la taille des débris), et le compresseur basse pression plus vite (ce qui le rend plus sensible aux débris). L'invention est donc particulièrement intéressante dans une turbomachine comprenant un réducteur. La région de rétrécissement est préférentiellement située au niveau du réducteur selon la direction amont-aval. En d'autres termes, la région de rétrécissement est préférentiellement décalée radialement, mais pas axialement, par rapport au réducteur.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 est une vue en coupe schématique dans un plan axial d'une turbomachine double-flux comprenant un carter selon un mode de réalisation de l'invention,
- la figure 2 est une vue en coupe schématique dans un plan axial d'une rainure selon un mode de réalisation de l'invention,
- la figure 3 est une vue en coupe schématique dans un plan axial d'une région de rétrécissement selon un mode de réalisation de l'invention,
- les figures 4a-c sont une vue en coupe dans un plan radial de rainures selon des modes de réalisation de l'invention,
- les figures 5a, 5b illustrent des rainures selon un premier mode de réalisation de l'invention,
- les figures 6a, 6b illustrent des rainures selon un deuxième mode de réalisation de l'invention,
- les figures 7a, 7b illustrent des rainures selon un troisième mode de réalisation de l'invention,
- les figures 8a, 8b illustrent des rainures selon un quatrième mode de réalisation de l'invention,
- les figures 9a, 9b illustrent des rainures selon un cinquième mode de réalisation de l'invention,
- les figures 10a, 10b illustrent des rainures selon un sixième mode de réalisation de l'invention, et
- la figure 11 illustre une zone dans laquelle débouchent les rainures dans un mode de réalisation de l'invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

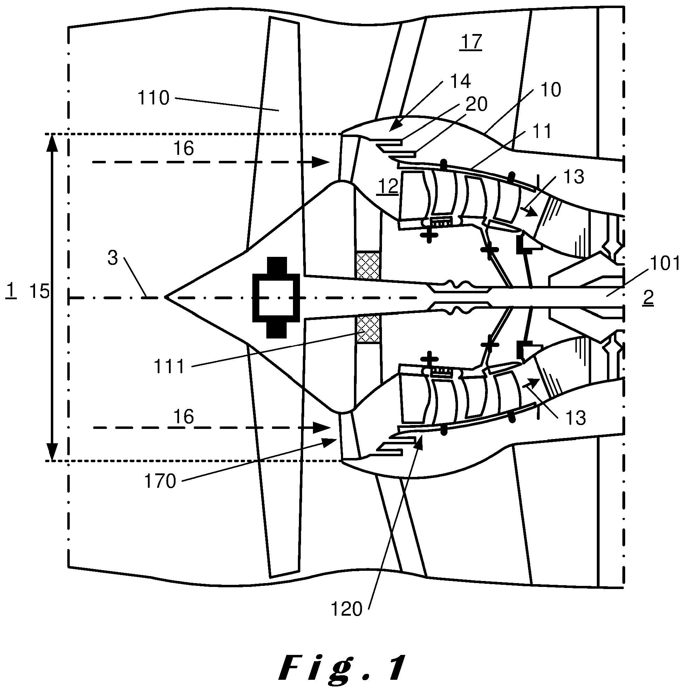

La figure 1 illustre une turbomachine double flux 100 comprenant successivement le long de l'axe moteur 3, une soufflante 110, un compresseur basse pression 120, un compresseur haute pression, une chambre de combustion, une turbine haute pression et une turbine basse pression. Elle comprend en outre au moins un arbre 101 et un réducteur 111 interposé au niveau de l'arbre 101. Le réducteur 111 permet de ralentir la rotation de la soufflante 110 par rapport à celle du compresseur basse pression 120 et de l'arbre 101. L'air passe dans la turbomachine 100 entre l'amont 1 et l'aval 2, selon une direction amont-aval 16 qui est considérée comme parallèle à l'axe 3 dans le cadre du présent document.

La turbomachine double flux 100 comprend un carter 10 comprenant une paroi intérieure 11 délimitant une veine primaire 12 agencée pour canaliser le flux primaire 13 de la turbomachine 100. Le flux secondaire s'écoule dans la veine secondaire 17 autour du carter 10. Une rangée d'aubes statoriques 170 est située dans la veine primaire 12, en amont du compresseur basse pression 120 et en aval de la soufflante 110. La paroi intérieure 11 de la veine primaire 12 comprend une région de rétrécissement 14 dans laquelle la paroi intérieure 11 a un diamètre 15 qui diminue selon la direction amont-aval 16. La région de rétrécissement 14 est préférentiellement en aval de la rangée d'aubes statoriques 170. La région de rétrécissement 14 est préférentiellement située au niveau du réducteur 111 selon la direction amont-aval 16. La région de rétrécissement 14 a préférentiellement la forme d'un col de cygne. La région de rétrécissement 14 comprend une pluralité de rainures 20 dans la paroi intérieure 11. Les rainures 20 sont de préférence arrangées en rangées.

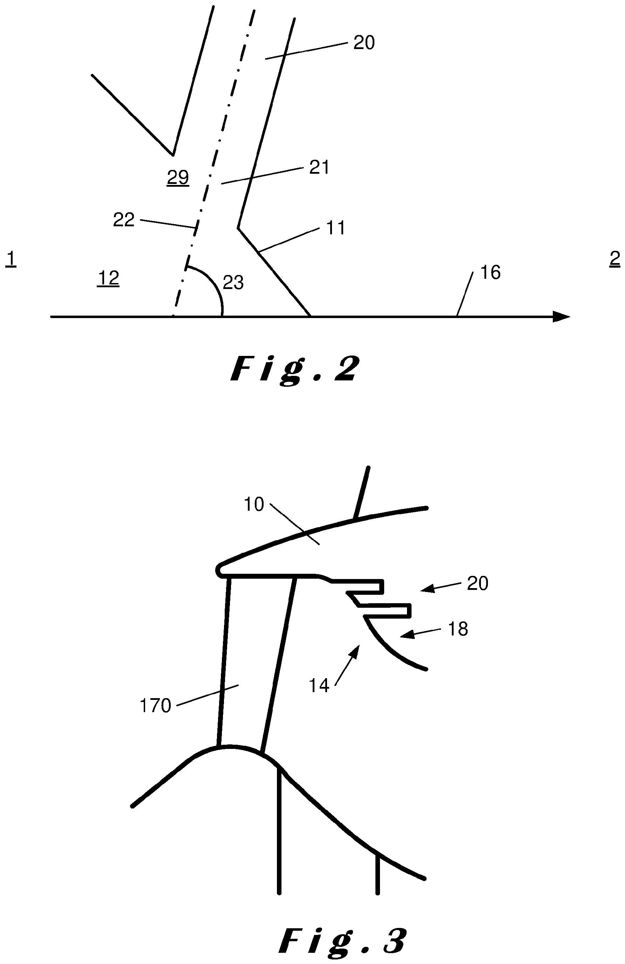

La figure 2 est un schéma illustrant une coupe axiale d'une rainure 20 selon un mode de réalisation de l'invention. La rainure 20 comprend une première partie 21 débouchant dans la veine primaire 12. Ainsi, la première partie 21 de la rainure 20 se termine par une ouverture 29 sur la veine primaire 12. La première partie 21 est orientée au moins partiellement vers l'aval 2. En d'autres termes, en partant de l'ouverture 29 et en progressant dans la première partie 21, on s'éloigne de l'amont 1.

La première partie 21 a une direction 22, par exemple la direction parallèle aux parois de la première partie 21. Puisque la première partie 21 est orientée au moins partiellement vers l'aval 2, l'angle 23 entre la direction 22 de la première partie 21 et la direction amont-aval 16, mesuré vers l'aval 2, est dans l'intervalle ]-90°, 90°[.

La figure 3 est une vue très schématique de la région de rétrécissement 14 dans un mode de réalisation de l'invention. La région de rétrécissement 14 comprend préférentiellement un point d'inflexion 18 où la conrainure de la paroi intérieure 11 change lorsqu'on considère une coupe axiale du carter 10. Au moins certaines des rainures 20 ont leur ouverture 29 située en amont dudit point d'inflexion 18, de préférence entre la rangée d'aubes statoriques 170 et le point d'inflexion 18.

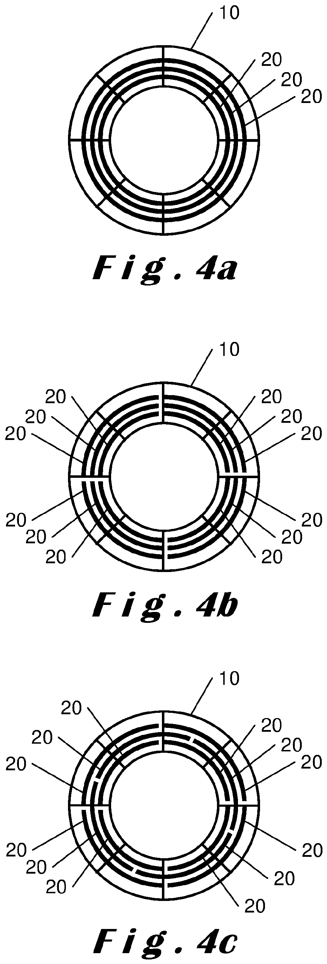

Dans les modes de réalisation illustrés aux figures 4a-4c, les rainures 20 sont des rainures de direction circonférentielle réparties en une à trois rangée(s). S'il y a au moins deux rangées, elles sont décalées axialement les unes des autres. A la figure 4a, les rainures sont continues sur toute la circonférence du carter 10. A la figure 4b, les rainures comprennent des interruptions qui sont toutes aux mêmes angles circonférentiels. Elles sont donc groupées, ou sectorisées, circonférentiellement. A la figure 4c, les rainures comprennent des interruptions qui sont décalées circonférentiellement. Elles se chevauchent donc circonférentiellement.

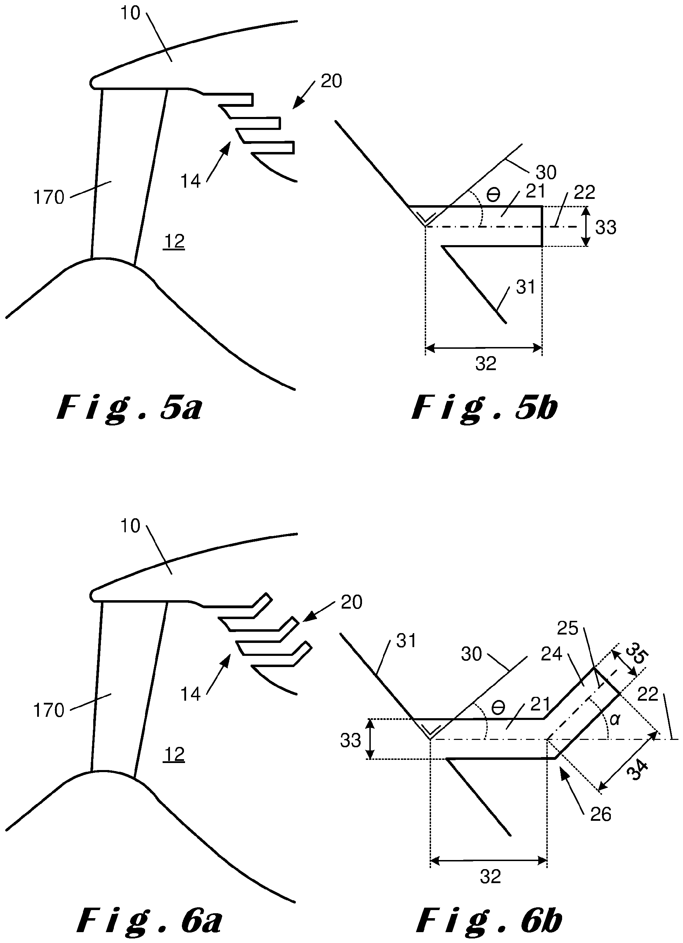

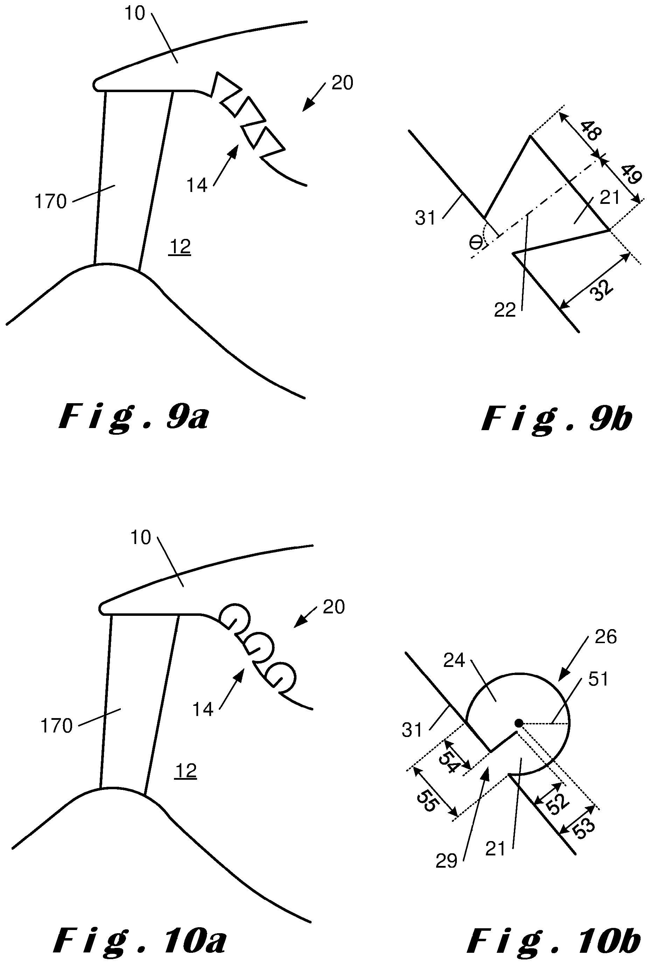

Les figures 5a/5b à 10a/10b illustrent différents modes de réalisation de l'invention en ce qui concerne la forme des rainures 20.

Les rainures 20 peuvent être droites et orientées totalement vers l'aval, comme illustré aux figures 5a et 5b.

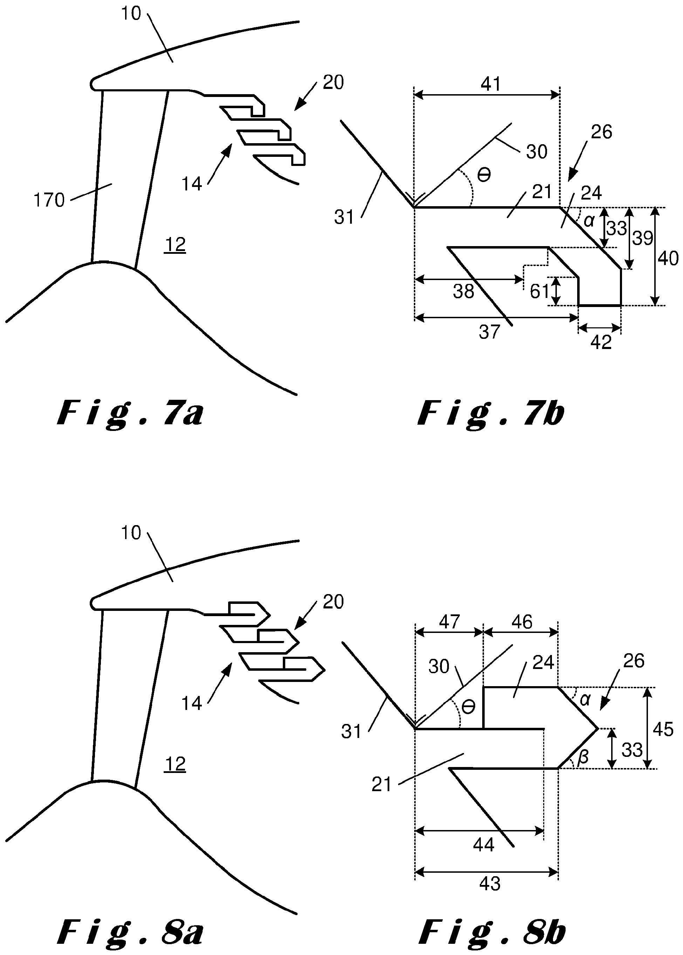

Les rainures 20 peuvent comprendre une deuxième partie 24 reliée à la première partie 21 par un coude 26, comme illustré aux figures 6a, 6b, 7a, 7b, 8a, 8b et 10a, 10b. La deuxième partie 24 peut être orientée vers l'amont (figures 8a, 8b et 10a, 10b), ou vers l'aval (figures 6a, 6b et 7a, 7b). La deuxième partie 24 peut être orientée radialement vers l'intérieur (figures 7a, 7b), ou radialement vers l'extérieur (figures 6a, 6b, 8a, 8b et 10a, 10b).

La première partie 21 peut s'élargir au fur et à mesure d'une progression dans la rainure 20, de préférence à partir de l'ouverture 29 comme illustré aux figures 9a, 9b et 10a, 10b. La section transverse de la rainure 20 est la section perpendiculaire à la direction 22 prise dans un plan perpendiculaire à la figure 2. Lorsque la première partie 21 s'élargit, la section transverse augmente dans la première partie 21.

Dans le mode de réalisation illustré aux figures 5a, 5b, la première partie 21 a préférentiellement une profondeur 32 entre 2 mm et 100 mm, et une épaisseur 33 entre 0,5 mm et 35 mm. L'angle θ entre la perpendiculaire 30 à la tangente 31 à la paroi intérieure 11 et la direction 22 de la première partie 21 est de préférence entre 0° et 85°.

Dans le mode de réalisation illustré aux figures 6a, 6b, la première partie 21 a préférentiellement une profondeur 32 entre 2 mm et 55 mm, et une épaisseur 33 entre 1 mm et 35 mm. La deuxième partie 24 a préférentiellement une profondeur 34 entre 2 mm et 55 mm, et une épaisseur 35 entre 1 mm et 35 mm. L'angle θ entre la perpendiculaire 30 à la tangente 31 à la paroi intérieure 11 et la direction 22 de la première partie 21 est de préférence entre 0° et 85°. L'angle α entre la direction 22 de la première partie 21 et la direction de la deuxième partie 24 est de préférence entre - 90° et 90°.

Dans le mode de réalisation illustré aux figures 7a, 7b, les dimensions peuvent par exemples êtres les suivantes : épaisseur 33 entre 1 et 18 mm, longueur 37 entre 6 et 80 mm, longueur 38 entre 6 et 80 mm, longueur 39 entre 1 et 45 mm, longueur 40 entre 5 et 45 mm, longueur 41 entre 6 et 98 mm, longueur 42 entre 1 et 18 mm, longueur 61 entre 0 et 44 mm, angle θ entre 0 et 85°, et angle α entre -90° et 90°.

Dans le mode de réalisation illustré aux figures 8a, 8b, les dimensions peuvent par exemples êtres les suivantes : épaisseur 33 entre 0,5 et 18 mm, longueur 43 entre 10 et 75 mm, longueur 44 entre 1 et 75 mm, longueur 45 entre 1 et 55 mm, longueur 46 entre 0 et 74 mm, longueur 47 entre 1 et 75 mm, angle θ entre 0 et 85°, angle α entre 15 et 90°, et angle β entre 15° et 90°.

Dans le mode de réalisation illustré aux figures 9a, 9b, les dimensions peuvent par exemples êtres les suivantes : profondeur 32 entre 1 et 35 mm, longueur 48 entre 0 et 20 mm, longueur 49 entre 0 et 20 mm, et angle θ et 10 et 110°.

Dans le mode de réalisation illustré aux figures 10a, 10b, les dimensions peuvent par exemples êtres les suivantes : rayon 51 entre 2 et 65 mm, longueur 52 entre 0% et 180% du rayon 51, longueur 53 entre 0% et 90% de la longueur 55, longueur 54 entre 0% et 90% du rayon 51, et longueur 55 déduit du rayon 51 et de la longueur 53.

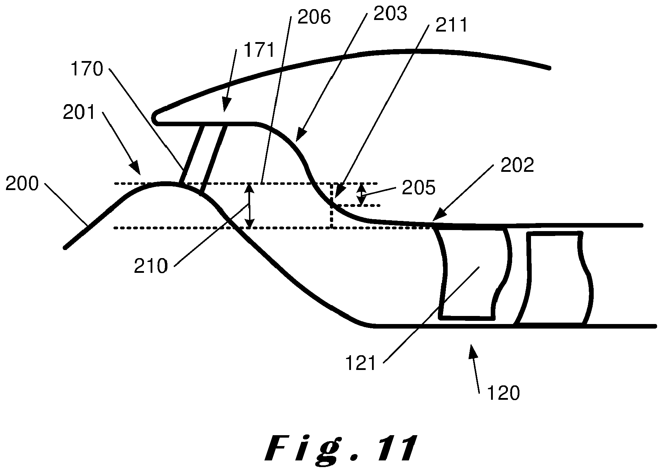

La figure 11 illustre une zone 203 des rainures 20 dans un mode de réalisation de l'invention. Cette zone 203 est déterminée de la façon suivante. On considère la ligne 201 de rayon maximal du carénage du tronc de cône 14. On considère la ligne 202 du carter 10 qui correspond à la partie la plus en amont du compresseur basse pression 120, préférentiellement sur le bord d'attaque de l'aube 121 la plus en amont du compresseur basse pression 120. On considère la distance radiale 210 entre ces deux lignes et la moitié de cette distance radiale 210 est appelée «première distance radiale » 205. On considère la prolongation axiale 206 vers l'aval de la ligne 201 de rayon maximal du cône 14. On détermine la ligne 211 de la paroi intérieure 11 comme située à une distance radiale égale à la première distance radiale 205 de cette prolongation axiale 206, vers l'intérieur. La zone 203 des rainures 20 est la zone située entre le bord aval 171 de la rangée d'aubes statoriques 170 et la ligne 211. Les « lignes » mentionnées dans ce paragraphe étant des cercles dans des plans perpendiculaires à l'axe, elles sont représentées comme des points à la figure 12.

En d'autres termes, l'invention se rapporte à un piège à débris comprenant des rainures 20 située dans une région de rétrécissement 14 d'une veine primaire 12 de flux primaire de turbomachine double flux 100 pour aéronef. La région de rétrécissement 14 peut être appelée « col de cygne ». Elle est située entre la rangée d'aubes statoriques 170 et le compresseur basse pression 120.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Carter (10) pour turbomachine double flux (100) pour aéronef, le carter (10) comprenant une paroi intérieure (11) délimitant extérieurement une veine primaire (12) de ladite turbomachine double flux (100), la paroi intérieure (11) comprenant une région de rétrécissement (14) dans laquelle la paroi intérieure (11) a un diamètre (15) qui diminue selon la direction amont-aval (16), la région de rétrécissement (14) étant prévue pour être en amont (1) d'un compresseur basse pression (120) de la turbomachine double flux (100) ;
**caractérisé en ce que**, dans la région de rétrécissement (12), ladite paroi intérieure (11) comprend une pluralité de rainures (20) débouchant dans la veine primaire (12).

2. Carter selon l'une quelconque des revendications précédentes, dans lequel la paroi intérieure (11) comprend un point d'inflexion (18) dans la région de rétrécissement (14) ; la pluralité de rainures (20) étant située, au moins partiellement, en amont dudit point d'inflexion (18).

3. Carter selon l'une quelconque des revendications précédentes, dans lequel les rainures (20) ont une direction circonférentielle.

4. Carter selon la revendication précédente, dans lequel les rainures (20) sont réparties en plusieurs rangées.

5. Carter selon la revendication précédente, dans lequel chaque rainure (20) comprend une première partie (21) débouchant dans le conduit (12), la première partie (21) étant orientée au moins partiellement vers l'aval (2).

6. Carter selon la revendication précédente, dans lequel les rainures (20) comprennent une deuxième partie (24) reliée à la première partie (21) par un coude (26).

7. Carter selon la revendication précédente, dans lequel la deuxième partie (24) est orientée vers l'amont (2).

8. Carter selon l'une quelconque des revendications 5 à 7, dans lequel la première partie (21) s'élargit au fur et à mesure d'une progression dans la rainure (20).

9. Carter selon l'une quelconque des revendications précédentes, dans lequel la pluralité de rainures (20) comprend un nombre de rainures (20) inférieur ou égal à douze.

10. Turbomachine double flux (100) pour aéronef comprenant un carter (10) selon l'une quelconque des revendications précédentes.

11. Turbomachine selon la revendication précédente, comprenant une soufflante (110), un compresseur basse pression (120), et une rangée d'aubes statoriques (170) entre la soufflante (110) et le compresseur basse pression (120) ; la région de rétrécissement (14) étant prévue pour être en aval de ladite rangée d'aubes statoriques (170).

12. Turbomachine selon la revendication précédente, dans laquelle au moins une partie des rainures (20) débouchent dans la veine primaire (12) dans une zone (203) située entre un bord aval (171) de la rangée d'aubes statoriques (170) et une ligne (211) de la paroi intérieure (11) située à une première distance radiale (205), vers l'intérieur, d'une prolongation axiale (206) d'une ligne (201) de rayon maximal d'un carénage du tronc de cône (14), la première distance radiale (205) étant la moitié de la distance radiale entre la ligne (201) de rayon maximal du carénage du tronc de cône (14) et une ligne (202) du carter (10) qui correspond à la partie la plus en amont du compresseur basse pression (120).

13. Turbomachine selon l'une quelconque des revendications 11 à 12, comprenant un réducteur (111) couplant le compresseur basse pression (120) et la soufflante (110), la région de rétrécissement (14) étant située au niveau du réducteur (111) selon la direction amont-aval (16).

14. Aéronef comprenant une turbomachine double flux (100) selon l'une quelconque des revendications 10 à 13.
